# EUROPEAN PATENT APPLICATION

(11) **EP 1 249 196 A1**
(43) Date of publication of application: **16.10.2002**
(21) Application number: 02007358.1
(22) Date of filing: 08.04.2002
(51) Int. Cl.: A47J 37/07, C10L 11/04

(54) **Device for carrying and burning charcoal**

(30) Priority: 11.04.2001 IT BO010032
(71) Applicant: Condor B S.r.l., 61019 S. Agata Feltria (Pesaro-Urbino) (IT)
(72) Inventor: Berloni, Antonio, 61100 Pesaro (IT)
(74) Representative: Modiano, Guido, Dr.-Ing.

(57) **Abstract**

A device (1) for carrying and burning charcoal, comprising an outer container (2) that contains a preset quantity of charcoal (3) and is made of combustible material, at least one pocket (5), also made of combustible material, being rigidly coupled to the container and dividing the space inside the container into a first compartment (6), occupied by the charcoal, and a second compartment (7), containing material (8) suitable to start the combustion of the charcoal.

## Description

The present invention relates to a device for carrying and burning charcoal.

It is known that the use of charcoal in preparing embers to be used to cook foods on a grill, for example in barbecues, is often awkward and unpleasant because opening the conventional bags that contain charcoal causes a considerable release of black coal dust and because lighting is difficult and requires additives suitable to facilitate ignition.

In particular, such additives, which are usually highly flammable, can become very dangerous in certain conditions. Further, in order to achieve rapid ignition, the charcoal must be stoked from below, i.e., the ignition starter must be placed under the charcoal bed. This simple procedure is often improvised by using for example paper or the like, which produce dirt when they burn.

The aim of the present invention is to obviate the above-cited known drawbacks, by providing a device that allows to meet the requirement of a more convenient transportation of the charcoal and a more efficient management of inventory-related operations.

Within this aim, an object of the present invention is to provide a device that is capable of ensuring greater cleanliness during the use of the charcoal and allows to use natural materials that are suitable to ensure faster and safer ignition of the charcoal.

This aim and this and other objects that will become better apparent hereinafter are achieved by the present device for carrying and burning charcoal, characterized in that it comprises an outer container that contains a preset quantity of charcoal and is made of combustible material, at least one pocket, also made of combustible material, being rigidly coupled to said container and dividing the space inside said container into a first compartment, occupied by said charcoal, and a second compartment, containing material suitable to start the combustion of the charcoal.

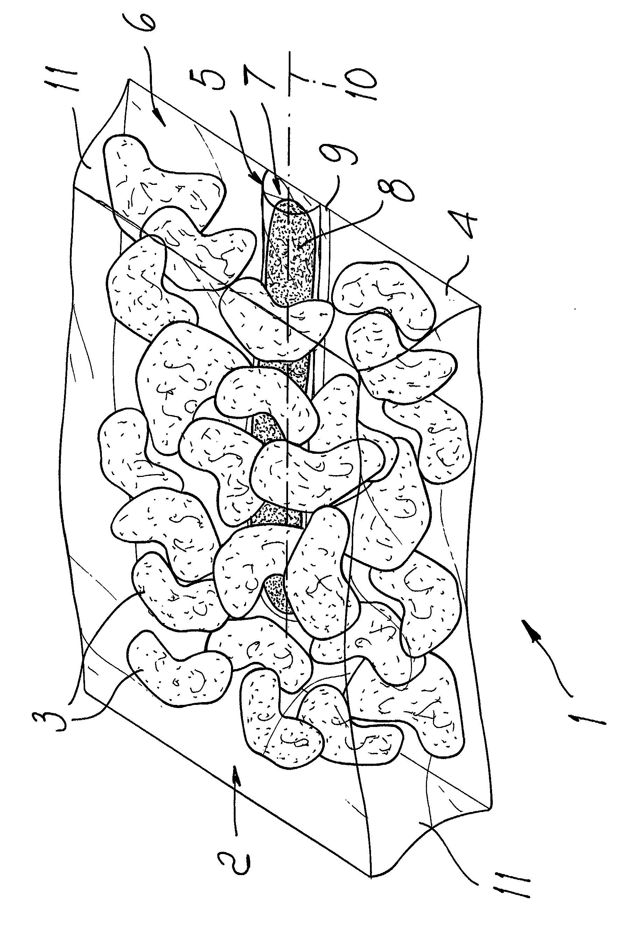

Further characteristics and advantages of the invention will become better apparent from the following description of an embodiment thereof, illustrated by way of non-limitative example in the accompanying drawing, wherein the figure is a perspective view of the device for carrying and burning charcoal.

With reference to the figure, the reference numeral 1 generally designates a device for carrying and burning charcoal according to the invention. The device 1 is composed of an external container 2, made of paper-like combustible material, which contains a preset quantity of charcoal pieces 3. Preferably, the container 2 is substantially prism-shaped so as to form a flat face or bottom 4 meant to rest on a barbecue.

A pocket 5 is contained in the container 2 and is also made of paper-like material and is joined to the face 4. The pocket 5 divides the space inside the container 2 between a first wider compartment 6, occupied by the pieces of charcoal 3, and a second compartment 7, which contains a preset quantity of material 8 suitable to constitute the starter for the subsequent combustion of the charcoal.

Advantageously, the material 8 is constituted by a mixture of wood dust dispersed in a matrix of solid paraffin.

The pocket 5 contained in the container 2 is connected to the face 4 at a central portion 9 of said face that lies along the major axis 10 of the container 2.

The method of use of the device 1 according to the present invention is simple and intuitive and can be summarized briefly as follows: the device 1 is placed directly at the site where the embers for cooking food are to be produced; then, by means of a suitable flame, the starter located in the central part 9 is ignited at one or both ends of the pocket 5 that are adjacent to the edges formed by the bottom 4 and respectively by the lateral faces 11. In this manner, the paper of the pocket 5 and of the container 2 burn, allowing the material 8 contained in the pocket 5 to ignite the charcoal 3.

The persistence of the flame then produces paraffin vapors, which by being highly flammable sustain and extend the combustion to all the charcoal pieces 3. Since the material 8 of the starter burns more rapidly than the charcoal pieces 3, there are practically no residues in the charcoal.

Advantageously, in the provision of the starter, a mixture of wood dust and paraffin has been chosen as a starting material 8. These components have unquestionable advantages: wood is the prime constituent from which charcoal is obtained, while paraffin is a non-aromatic hydrocarbon that lends itself well to producing a combustion without the residues of pyrolysis that are typical of aromatic hydrocarbons. Moreover, this mixture has the undisputed advantage of not contaminating the porous mass of charcoal with toxic substances or with substances that might give the foods unpleasant odors and tastes.

In the practical execution of the invention, the container 2 is shaped like a pyramid which, after the combustion of the container, helps to keep the charcoal pieces 3 stacked and to form uniform embers. In another embodiment there are a plurality of pockets 5 that contain the starter material 8 and are variously arranged on the bottom 4 of the container 2.

The disclosures in Italian Utility Model Application No. BO2001U000032, from which this application claims priority, are incorporated herein by reference.

Where technical features mentioned in any claim are followed by reference signs, those reference signs have been included for the sole purpose of increasing the intelligibility of the claims and accordingly such reference signs do not have any limiting effect on the scope of each element identified by way of example by such reference signs.

## Claims

1. A device for carrying and burning charcoal, **characterized in that** it comprises an outer container that contains a preset quantity of charcoal and is made of combustible material, at least one pocket, also made of combustible material, being rigidly coupled to said container and dividing the space inside said container into a first compartment, occupied by said charcoal, and a second compartment, containing material suitable to start the combustion of said charcoal.

2. The device according to claim 1, **characterized in that** said container comprises a substantially flat face for resting on a barbecue, said pocket being joined to said resting face at a central portion of said face.

3. The device according to claims 1 and 2, **characterized in that** said container has a substantially prism-like shape.

4. The device according to one of claims 1 to 3, **characterized in that** said container and said pocket are made of a paper-like material.

5. The device according to one of claims 1 to 4, **characterized in that** said starting material is composed of a mixture of wood dust dispersed in a solid paraffin matrix.

6. The device according to one of claims 2 to 5, **characterized in that** it comprises a plurality of pockets variously arranged on said resting face.
